# EUROPEAN PATENT APPLICATION

(11) **EP 2 039 949 A1**
(43) Date of publication of application: **25.03.2009**
(21) Application number: 07018529.3
(22) Date of filing: 20.09.2007
(51) Int. Cl.: F16C 11/06, F16C 23/04

(54) **A ball coupling**

(71) Applicant: Uniparts India Ltd., New Delhi 110070 (IN)
(72) Inventor: Coenen, Herbert, New Delhi 110070 (IN)
(74) Representative: Herzog, Martin

(57) **Abstract**

The invention provides for a ball coupling that comprises of a socket member (8) and a ball member (14) wherein the ball member (14) can be placed and retained in the socket member (8) in an expedient manner as well as removed from the socket member (8) in an expedient manner. The socket member (8) can be formed by simple machining and may be connected to a rod or other movable element and does not require a recess to be forged or cast. The ball member (14) is also simple to construct and may be attached to another rod or movable element, such that a relatively large angular travel is permitted between the socket member (8) and the ball member (14).

## Description

The invention relates generally to ball couplings including spherical rod end couplings and ball joints. More particularly the invention relates to a disconnect ball coupling that does not require a recess to be forged, cast or machined.

### BACKGROUND OF THE INVENTION:

Ball couplings such as spherical rod ends and ball joints are extensively used for a wide variety of applications including steering linkages, aircraft surface controls, door assemblies, toys, agricultural applications and in numerous other mechanical, hydraulic and pneumatic applications.

A ball coupling typically comprises of a socket member and a ball member that fits in the socket member to form a joint, such that the two have a relatively wide angular travel with respect to each other. The socket member is typically a housing with a recess that forms a socket.

A wide variety of different designs are in use. These can be grouped in designs with fixed balls where an exchange of the ball is not possible and designs with exchangeable balls.

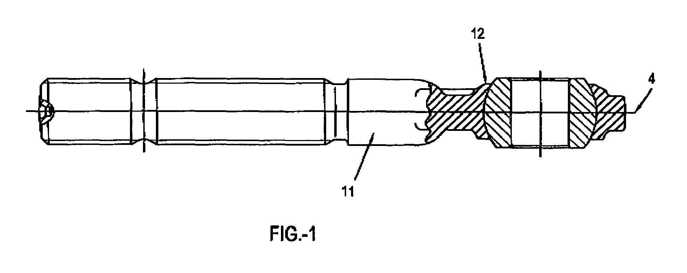

With reference to figure 1, a fixed ball design is illustrated. The ball is locked in the housing (11) by creating the lip (12). Design options are to crimp or weld to the housing (11), such that the ball is retained in the housing. The design shown in figure 1 is used in designs and applications where the loading is well defined in regard to the orientation and the recess is positioned in a manner that adequate support is given. If loading directions vary this design has significant disadvantages due to the loading capability.

The advantage of designs with exchangeable balls is that balls can be replaced in case a different configuration is required including different ball width, different drilling size or in the event of ball failure. An exchangeable ball design allows a more flexible manufacturing process as well due to the fact that the assembly process can take place at various stages of the value chain. Various designs of exchangeable ball joints that offer quick disconnect are commercially available, examples of which may be found in US 2859060, US 5335947 and US 4776720, and the same are incorporated here in entirety herein.

The type of exchangeable ball designs discussed above employ a sleeve or ring or some element that locks the ball member in the socket member and can be easily withdrawn, such as by rotation or by spring action, to allow a quick disconnect of the ball member from the socket member. These designs are however susceptible to failure or inadvertent disengagement as the spring may wear or the ring or sleeve retaining the ball may turn loose with use, particularly rough industrial or agricultural use.

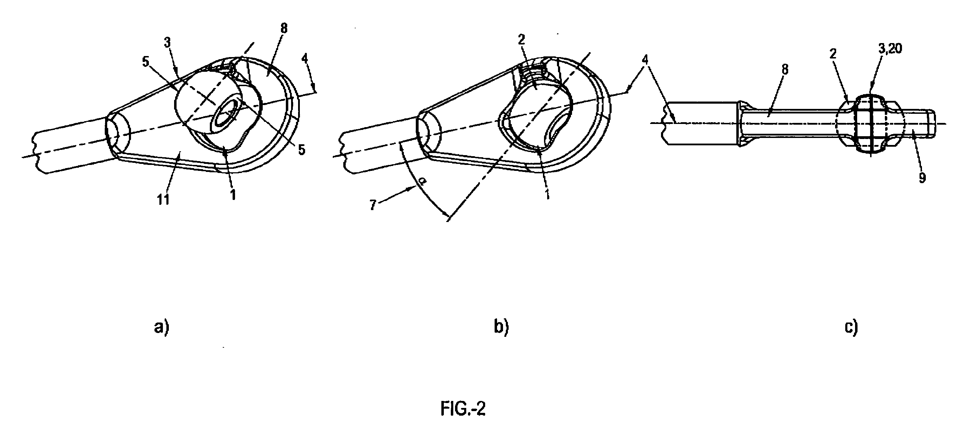

Another type of quick disconnect ball coupling employing an exchangeable ball is illustrated in figure 2a and figure 2b in which a ball (2) enters a recess in the housing (11). The ball has a central opening, usually drilled, along an axis referred to as the ball axis (3). The ball (2) has to be positioned in a manner about the ball axis (3) such that the perpendicular ball faces (5) can enter the recess (1) or socket. After entering the socket the ball (2) is rotated about an axis that is perpendicular to the ball axis (3), such that ball axis (3) is in line with axis (20) of the socket. Rotation of the ball in the socket causes the spherical surface of the ball to lock with the undercut (9) formed in the socket. This creates a positive lock and prevents the ball from exiting the housing.

The angle (7) describes the position of the recess (1) with respect to axis (4) of the housing. Depending on the end application there are designs where the angle (7) varies from 0° to 90°.

This type of ball coupling overcomes some of the shortcomings of the earlier designs, but nevertheless still requires the socket member to be forged or cast. Moreover such a socket requires a specific geometry that can be complex and difficult to forge, cast or machine.

While much prior art has been directed towards the problem that this invention is directed towards no economical and easy to construct solution appears to have been realized for a ball coupling that is capable of quick disconnect and can sustain the loading requirements during operational use.

There is therefore the requirement of a simple ball coupling that may be economically constructed, quickly disconnected and does not require additional retaining elements for the ball member or a recess to be forged or cast for the socket member.

### BRIEF DESCRIPTION OF THE ACCOMPANYING DRAWINGS

The accompanying drawings illustrate the preferred embodiments of the invention and together with the following detailed description serve to explain the principles of the invention.

Figure 1 illustrates a fixed ball design of ball couplings.

Figure 2 illustrates an example of a type of exchangeable ball design.

Figure 3 illustrates a ball coupling in accordance with an embodiment of the invention.

Figure 4 illustrates the socket member in accordance with an embodiment of the invention.

Figure 5 illustrates the ball member in accordance with an embodiment of the invention.

Figure 6 illustrates a perspective view of the ball member in accordance with an embodiment of the invention.

### DETAILED DESCRIPTION OF THE INVENTION

For the purpose of promoting an understanding of the principles of the invention, reference will now be made to the embodiment illustrated in the drawings and specific language will be used to describe the same. It will nevertheless be understood that no limitation of the scope of the invention is thereby intended, such alterations and further modifications in the illustrated device, and such further applications of the principles of the invention as illustrated therein being contemplated as would normally occur to one skilled in the art to which the invention relates.

Throughout the patent specification, a convention employed is that in the appended drawings, like numerals denote like components.

The invention provides for a ball coupling that comprises of a socket member and a ball member wherein the ball member can be placed and retained in the socket member in an expedient manner as well as removed from the socket member In an expedient manner. The socket member can be formed by simple machining and may be connected to a rod or other movable element and does not require a recess to be forged or cast. The ball member is also simple to construct and may be attached to another rod or movable element, such that a relatively large angular travel is permitted between the socket member and the ball member. Furthermore, the invention provides for a ball coupling that does not require additional retainer means to hold the ball member in the socket member.

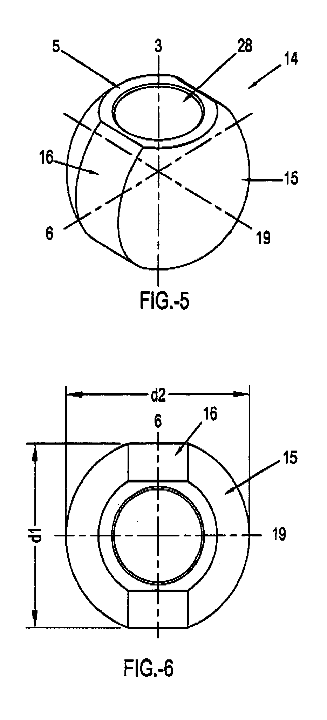

With reference to figures 5 and 6, a ball member in accordance with an embodiment of the invention is illustrated. The ball member (14) is not a true ball. Its outer shape is partially spherical (15) and partially cylindrical (16). The ball member has a central bore (28), typically drilled along an axis referred to as the ball axis (3). The bore (28) may be up to a certain depth or a through opening, as required by the application and is adapted to receive any rod or shaft (not shown).

For the purposes of explanation, we shall apply the three-dimensional Cartesian co-ordinate system comprising three mutually perpendicular axes to the ball member so as to better understand the ball geometry. Assume the ball axis of the central bore to be along the z-axis, then axis (19) and (6) are the x-axis and y-axis respectively.

Assuming the ball axis as the first of the three mutually perpendicular axes, the ball member has a partly cylindrical surface (16) along the axis (19) that is along a second axis of the three mutually perpendicular axes. These cylindrical surfaces are symmetrical about the bore (28). The width of the cylindrical surface depends on the depth of the opening in the housing or the socket member. The diameter `d1' of the cylindrical surfaces (16) is smaller than the diameter of the socket member. This facilitates the entry of the ball member in to the socket member by aligning the cylindrical surfaces with the opening in the socket member.

The ball member also has a pair of spherical surfaces (15) along the axis (6) that is along the third axis of the three mutually perpendicular axes. The spherical surfaces have a diameter 'd2' that in the preferred embodiment fits the profile of the opening in the socket member. The diameter 'd2' is smaller than the profile (13) of the socket member such that the ball member can move within the opening of the socket member.

The ball member may have opposing truncated surfaces (5), or at least one truncated surface with bore passing through it, to form a ball face, as illustrated. The ball face lies perpendicular to the bore axis. The surfaces (5) assist the design in a manner achieving a defined geometry and not a geometry as a function of actual size of drilling (28), and the profiles (15) & (16).

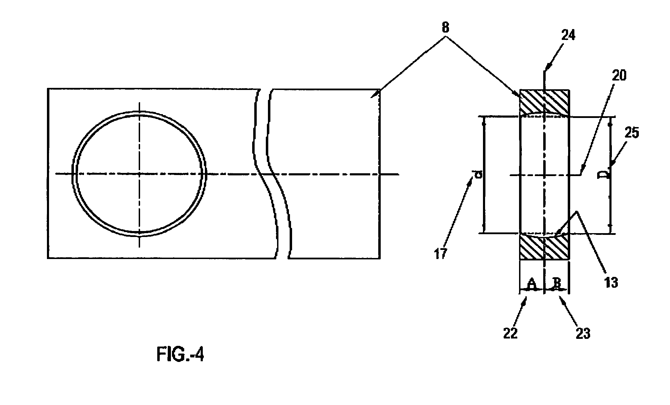

With reference now to figure 4, a housing forming a socket member in accordance with an embodiment of the invention is illustrated. In line with the principles of the invention the housing or socket member may be formed on any piece of material, including a metal flat, without any complex forging or casting. The ability to form the socket member in a flat metal piece has significant advantages and finds application in various fields.

As illustrated a socket member (8), in the form of a metal flat is employed. An opening in the form of a profile (13) is formed in the flat. The profile of the socket member is symmetrical and there is no discontinuity in shape like a recess for ball assembly purposes, and is thus relatively simpler to create than a corresponding cast or forged socket member. The profile (13) may be considered to comprise of two parts.

The profile forms undercut (21) that serves to retain the ball member within the socket member. The inner surface of the profile (13) corresponds to the spherical surfaces of the ball member.

Axis (24) of the profile defines the joint between the two parts of the profile that are adjacent each other whereas axis (20) is the axis of the socket member. If the profile (13) is symmetrical in regard to axis (24) and dimension A (22) is with manufacturing tolerances equal to dimension B (23) then the ball member can be passed through the socket member because dimension (17) equals dimension (25). Thus the ball member may enter the socket member from either side.

If dimension A (22) and B (23) differ and the profile (13) is off centre to axis (24) then dimension (17) differs from dimension (25). If any of the dimensions is larger than the other then the ball can be entered but not passed through.

If the socket member centre axis (24) is moved, the opening of the socket member for the ball member to enter varies. It varies in a manner that on the side where the distance from face to axis (24) increases the diameter of the opening will reduce. Moving the centreline towards any face has some advantages such as the increase in the ratio spherical diameter/opening diameter and changing the size of the under cut.

Due to the change in ratio the load capacity to push the ball out of the socket is higher on the side with the smaller opening, that is the side with the larger ratio of spherical diameter./opening diameter, on account of more under cut. Due to the different diameter of openings the ball coupling may be designed in a fashion that one opening is smaller than the diameter 'd1' of the cylindrical surfaces and thus the ball member can only be entered into the socket member from one side and cannot fall through. This simplifies the assembly because it is not required to centre the ball for rotating it from the assembly orientation into the locking orientation. Furthermore in situations where the orientation of the two openings is not horizontal and the larger opening is above the smaller opening, the ball member would not be in a position to fall out.

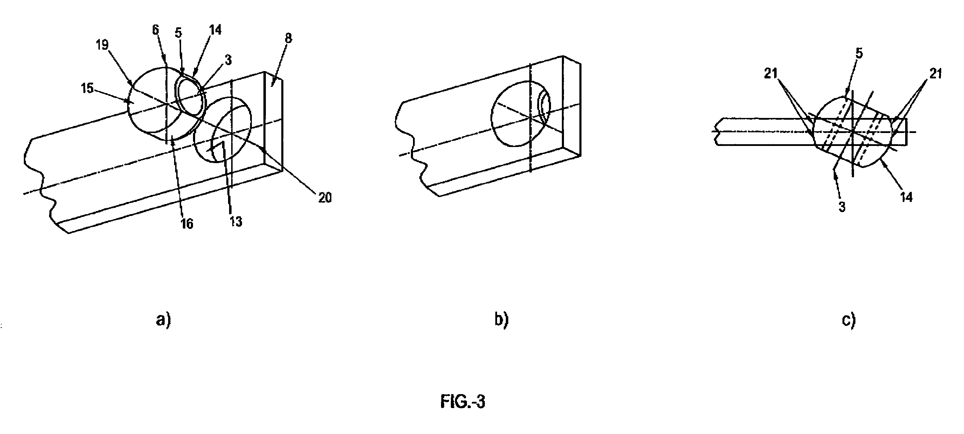

With reference now to figure 3, the assembly of the ball coupling using the ball member and the socket member is illustrated. With reference initially to figure 3(a) the ball (14) is shown outside the socket member (8). In order that the ball member enter the socket member, the ball member is to be rotated in a position such that axis (19) is aligned with axis (20) of the socket. In this position the ball (14) can enter the profile (13), as the diameter of the cylindrical surfaces 'd1' and the diameter between the truncated ball faces (5) is smaller than the diameter of the socket opening. Once the ball member has entered the socket member, as illustrated in figure 3(b), by rotating the ball on axis (6), the spherical surfaces (15) will come in contact with the profile (13). Moreover, the rotation of the ball in this manner will result in the ball being locked with the undercut (21) formed by the profile (13). This lock causes the ball member to be retained in the socket member. The rotation of the ball member, along axis (6) has been illustrated in figure 3(c).

The ball coupling as described by the invention provides a simplified geometry and no recess has to be forged, casted or machined. The load taking possibility and load distribution is equal. The ball coupling design also allows the creation of a spherical joint without swaging, welding or creating a recess. It is a significant advantage that just by a machining into a piece of material like a flat shown in figure 4 a joint can be created. The load taking capability due to the fact that some of the spherical shape of the ball had been sacrificed is not limited or at least significant less to existing designs.

The ball coupling as described can be used in disconnect joints. For example the ball coupling may be employed in a three-point linkage of a tractor as also connecting rods, struts and so on for agricultural and construction equipment or applications..

It will readily be appreciated by those skilled in the art that the present invention is not limited to the specific embodiments herein shown. Thus variations may be made within the scope and spirit of the accompanying claims without sacrificing the principal advantages of the invention.

## Claims

1. A ball coupling comprising of a ball member with a bore along a first axis of three mutually perpendicular axes; the ball having a pair of spherical surfaces on opposite sides of the bore along a second axis of the three mutually perpendicular axes; and a pair of cylindrical surfaces on opposite sides of the bore along the third axis of the mutually perpendicular axes; and a socket member having a profile that creates an opening to receive the ball member; the profile includes two parts adjacent each other along an axis perpendicular to the axis of the socket member.

2. A ball member as claimed in claim 1 wherein the spherical surfaces on the ball member match the spherical machining in the socket member.

3. A ball member as claimed in claim 1 wherein the diameter of the cylindrical surfaces is less than the diameter of the opening of the socket member.

4. A socket member as claimed in claim 1 wherein the profile on the socket member is symmetrical along the axis perpendicular to the axis of the socket member so that the ball member can enter the socket member from either side.

5. A socket member as claimed in claim 1 wherein the profile on the socket member is not symmetrical along the axis perpendicular to the axis of the socket member so that the ball member can enter the socket member from one side only.

6. A socket member as claimed in claim 1 wherein the socket member is formed on a substantially flat piece of material to receive the ball member.

7. A three-point linkage of a tractor employing a ball coupling as claimed in any of the preceding claims.

8. A ball member as claimed in claim 1 wherein the bore is either through or closed at one end.

9. A ball member as claimed in claim 1 wherein diameter of the cylindrical surfaces is less than the diameter of opening of the socket member.
